(19)

**Europäisches Patentamt**

**European Patent Office**

**Office européen des brevets**

(11) **EP 2 889 839 A1**

(12) **EUROPEAN PATENT APPLICATION**

(43) Date of publication:
01.07.2015 Bulletin 2015/27

(51) Int Cl.:
*G06T 7/20* (2006.01)

(21) Application number: 13199638.1

(22) Date of filing: 27.12.2013

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Patents Factory Ltd. Sp. z o.o.**
**66-002 Nowy Kisielin (PL)**

(72) Inventors:
• **Paczkowski, Jacek**
**66-002 Nowy Kisielin (PL)**

• **Kramek, Krzystof**
**66-002 Nowy Kisielin (PL)**

(74) Representative: **Blonski, Pawel**
**EP-Patent**
**Konstruktorow 30/2**
**65-119 Zielona Gora (PL)**

Remarks:
Amended claims in accordance with Rule 137(2)
EPC.

(54) **System and method for movement detection in images sequence**

(57) Method for movement detection in images sequence, the method comprising receiving a set of N video frames and setting the last frame of the set as the current frame, the method further comprising the steps of: creating, based on two first video frames of the set a MIN bitmap having RGB color space, the MIN bitmap comprising RGB pixel values that are lowest among the first frame and the second frame of the set of N; creating, based on two first video frames of the set a MAX bitmap having RGB color space, the MAX bitmap comprising RGB pixel values that are highest among the first frame and the second frame of the set of N; for each subsequent frame of the set of N frames, iteratively modifying, the MIN and MAX bitmaps such that new MIN value is the lower value of the previous MIN for the given pixel and the value a the pixel in the subsequent frame whereas the new MAX value is the greater value of the previous state MAX for the given pixel and the value a the pixel in the subsequent frame; calculating a differential bitmap from the MIN and MAX bitmaps; generating a monochrome movement representing bitmap from the differential bitmap; filtering the monochrome movement representing bitmap against a threshold; merging adjacent pixels of the filtered bitmap, representing movement, into objects and subsequently creating for each filtered bitmap an objects' descriptors database.

101 Receive a set of N video frames

102 Set the last frame of the set as the current frame

103 Create the MIN, MAX bitmaps for the first two frames of the set, comprising minimum and maximum values respectively of the pixels of the first two frames

104 Create the MIN, MAX bitmaps for the subsequent frames wherein the first frame is the Kth frame and the second frame is the previous MIN or MAX frame respectively

105 Create a differential bitmap from the MIN and MAX bitmaps

106 Generate movement bitmap MOVE

107 Filter the movement map MOVE Into an inMOVE bitmap

108 Analyse the inMOVE bitmap In order to find objects

Fig. 1

**Description**

The present invention relates to a system and a method for movement detection in images sequence. In particular the present invention relates to intelligent surveillance systems.

Surveillance systems and in particular video surveillance systems have become increasingly popular during the recent decade. Involvement of human operators in such systems frequently results in drawbacks such as high labor cost, limited capability for multiple screens, inconsistency in judgment. In response to that intelligent surveillance systems have been developed that have the aim of automatically identifying abnormal behaviors in videos.

The intelligent surveillance systems involve objects' classification, learning and analysis of behavior based on texture and optical flow. It is desirable for such systems to operate in real-time and hence they are heavy on hardware requirements.

A prior art publication of US 8437503 B2 entitled "Method for detecting a moving object in an image stream" discloses a method for detecting a moving object in a stream of images taken at successive instants, of the type comprising, for each zone of a predefined set of zones of at least one pixel of the image constituting a current image, a step of determining whether the zone belongs to the moving object. The method also comprising a step of searching in at least one preceding image of the stream and along at least one predefined direction and orientation, for another zone determined as belonging to a moving object, and a step of negating the fact that said zone belongs to a moving object if the search is negative.

Another prior art publication US 7436887 B2 entitled "Method and apparatus for video frame sequence-based object tracking" discloses an apparatus and method for the analysis of a sequence of captured images covering a scene for detecting and tracking of moving and static objects and for matching the patterns of object behavior in the captured images to object behavior in predetermined scenarios. The apparatus and method may be utilized in a monitoring and surveillance system. The surveillance system is operative in the detection of potential alarm situation via a recorded surveillance content analysis and in the management of the detected unattended object situation via an alarm distribution mechanism. The object tracking apparatus supports the object tracking method that incorporates a unique method for detecting, tracking and counting objects across a sequence of captured surveillance content images. Through the operation of the object tracking method the captured content is analyzed and the results of the analysis provide the option of activating in real time a set of alarm messages to a set of diverse devices via a triggering mechanism. In order to provide the context in which the object tracking apparatus method is useful, several exemplary associated applications will be briefly described. The method of the present invention may be implemented in various contexts such as the detection of unattended objects (luggage, vehicles or persons), identification of vehicles parking or driving in restricted zones, access control of persons into restricted zones, prevention of loss of objects (luggage or persons) and counting of persons, as well as in police and fire alarm situations. In likewise manner the object tracking apparatus and method described here in may be useful in myriad of other situations and as a video objects analysis tool.

Yet another prior art publication US 6678413 B1 entitled "System and method for object identification and behavior characterization using video analysis" discloses systems and methods for finding the position and shape of an object using video. The system includes a system with a video camera coupled to a computer in which the computer is configured to automatically provide object segmentation and identification, object motion tracking (for moving objects), object position classification, and behavior identification. In a preferred embodiment, the present invention may use background subtraction for object identification and tracking, probabilistic approach with expectation-maximization for tracking the motion detection and object classification, and decision tree classification for behavior identification. Thus, the present invention is capable of automatically monitoring a video image to identify, track and classify the actions of various objects and the object's movements within the image. The image may be provided in real time or from storage. The invention is particularly useful for monitoring and classifying animal behavior for testing drugs and genetic mutations, but may be used in any of a number of other surveillance applications.

The aim of the development of the present invention is an effective (in terms of low computational complexity) and specific detection of moving objects in a video images sequence.

In view of the above, it is desirable to improve the correctness and efficiency of objects detection with a simultaneous decrease of computational effort that leads to simplification of required hardware components and thus total cost of surveillance devices.

The object of the present invention is a method for movement detection in images sequence, the method comprising receiving a set of N video frames and setting the last frame of the set as the current frame, the method it further comprises the steps of: creating, based on two first video frames of the set a MIN bitmap having RGB color space, the MIN bitmap comprising RGB pixel values that are lowest among the first frame and the second frame of the set of N; creating, based on two first video frames of the set a MAX bitmap having RGB color space, the MAX bitmap comprising RGB pixel values that are highest among the first frame and the second frame of the set of N; for each subsequent frame of the set of N frames, iteratively modifying, the MIN and MAX bitmaps such that new MIN value is the lower value of the previous MIN for the given pixel and the value a the pixel in the subsequent frame whereas the new MAX value is the greater value of the previous state MAX for the given pixel and the value a the pixel in the subsequent frame; calculating a differential bitmap from the MIN and MAX bitmaps; generating a monochrome movement representing bitmap from the differential bitmap; filtering the monochrome movement representing bitmap against a threshold; merging adjacent pixels of the filtered bitmap, representing movement, into objects and subsequently creating for each filtered bitmap an objects' descriptors database.

Preferably, the step of creating the MIN bitmap RGB pixel values includes calculating pixels values with the following equation $MIN\_R_{(x, y)} = min(Frame1\_R_{(x, y)}, Frame2\_R_{(x, y)})$ wherein R denotes a color component and x, y denote pixel's coordinates.

Preferably, the step of creating the MAX bitmap RGB pixel values includes calculating pixels values with the following equation $MAX\_R_{(x, y)} = max(Frame1\_R_{(x, y)}, Frame2\_R_{(x, y)})$ wherein R denotes a color component and x, y denote pixel's coordinates.

Preferably, the step of iteratively modifying the MIN and MAX bitmaps, for each subsequent frame of the set of N frames, includes executing the following equation for the MIN bitmap: $MIN\_R_{(x, y)} = min(FrameK\_R_{(x, y)}, MIN\_R_{(x, y)})$ and the following equation for the MAX bitmap: $MAX\_R_{(x, y)} = max(FrameK\_R_{(x, y)}, MAX\_R_{(x, y)})$ wherein FrameK denotes $K^{th}$ frame in the set of N frames, R denotes color component of each pixel and x, y denote pixels coordinates.

Preferably, the value of N is chosen depending on the amount of expected movement and/or speed of the movement in the video sequence.

Preferably, the step of calculating 105 a differential bitmap from the MIN and MAX bitmaps includes executing the following equation: $DIFF\_R_{(x, y)} = MAX\_R_{(x, y)} - MIN\_R_{(x, y)}$ wherein R denotes color component of each pixel and x, y denote pixels coordinates.

Preferably, the step of filtering the monochrome movement representing bitmap against a threshold is such that in case a value in the monochrome movement representing bitmap is greater than the threshold value, the value of 1 is entered into the filtered bitmap and in case the value in the monochrome movement representing bitmap is equal of lower than the threshold value, the value of 0 is entered into the filtered bitmap.

Preferably, the step of creating for each filtered bitmap an objects' descriptors database includes providing for each object: object's location and/or outline of the object in a vector form and/or vertices coordinates of a smallest rectangle circumscribed on the object.

Preferably, the objects' descriptors database is added to a video frame being the first frame of the set of N frames.

Another object of the present invention is a system for movement detection in images sequence, the method comprising receiving a set of N video frames and setting the last frame of the set as the current frame, the system further comprising: creating, in a MIN frame generator, based on two first video frames of the set a MIN bitmap having RGB color space, the MIN bitmap comprising RGB pixel values that are lowest among the first frame and the second frame of the set of N; creating, in a MAX frame generator, based on two first video frames of the set a MAX bitmap having RGB color space, the MAX bitmap comprising RGB pixel values that are highest among the first frame and the second frame of the set of N; for each subsequent frame of the set of N frames, iteratively modifying, the MIN and MAX bitmaps such that new MIN value is the lower value of the previous MIN for the given pixel and the value a the pixel in the subsequent frame whereas the new MAX value is the greater value of the previous state MAX for the given pixel and the value a the pixel in the subsequent frame; calculating, by a difference frame generator, a differential bitmap from the MIN and MAX bitmaps; generating, by a frame movement representing bitmap generator, a monochrome movement representing bitmap from the differential bitmap; filtering, by a movement representing bitmap filter, the monochrome movement representing bitmap against a threshold; merging, by a controller, adjacent pixels of the filtered bitmap, representing movement, into objects and subsequently creating for each filtered bitmap an objects' descriptors database.

Another object of the present invention is a computer program comprising program code means for performing all the steps of the computer-implemented method according to the present invention when said program is run on a computer.

Another object of the present invention is a computer readable medium storing computer-executable instructions performing all the steps of the computer-implemented method according to the present invention when executed on a computer.

These and other objects of the invention presented herein are accomplished by providing a computer-implemented method and system for movement detection in images sequence. Further details and features of the present invention, its nature and various advantages will become more apparent from the following detailed description of the preferred embodiments shown in a drawing, in which:

FIG. 1 presents a method according to the present invention;

FIG. 2 presents a system according to the present invention.

NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

The present invention is a method of detecting movement in a video images sequence. The method is based on a comparison of information from a number of consecutive video frames. The method creates for each video frame a bitmap of candidate pixels to a stationary background or objects in motion. The next step is to group adjacent pixels into larger objects, which are then described (their location, shape, size, etc.) in created for each frame of a video database. Description of each object in motion is then stored as a record in the database. The database is a basis for classification of objects in terms of the risks posed. Classification is a query on a database with predefined threshold parameters for each field of the record. The method according to the present invention is characterized by very low computational complexity.

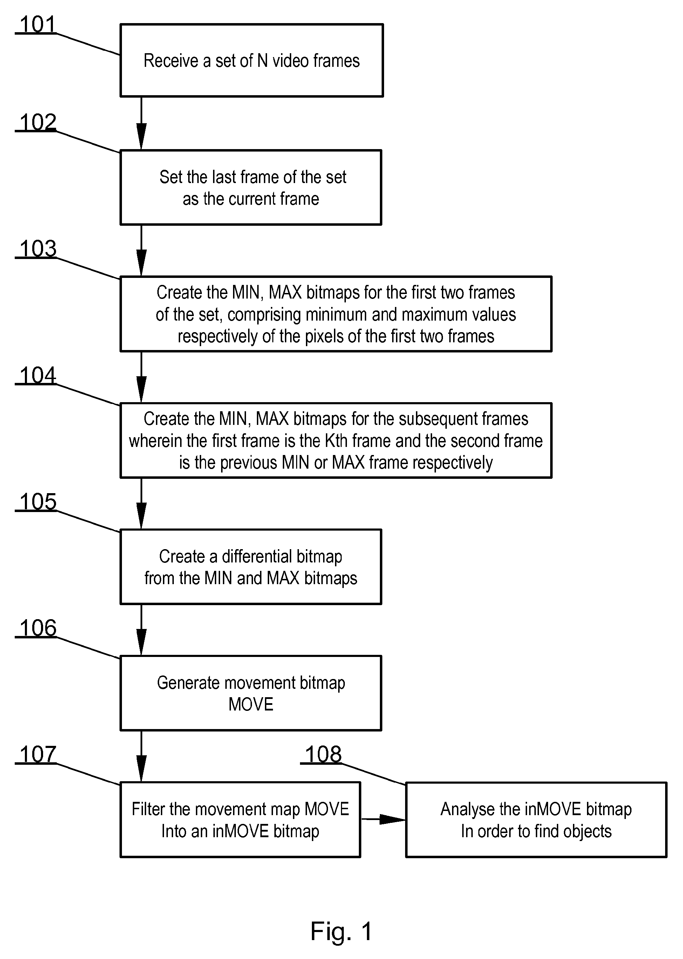

FIG. 1 presents a method according to the present invention. All foregoing steps are presented with respect to video frames, pixels of which are defined in the RGB color space.

The first step 101 is to receive a set of N video frames and setting 102 the last frame of the set as the current frame. The setting of the last frame of the set as the current frame is relevant because it is the latest frame received from the camera. All other frames are older and typically buffered. By selecting lower or higher value of N, based on objects' speed, it is convenient to do it with respect to the last frame. It is to be understood however that another frame may be set a the current frame. The set of the N frames will be subject to further analysis.

Subsequently, at step 103, the method creates, based on two first video frames of the set, two bitmaps MIN and MAX (each having RGB color space). The values of pixels of these bitmaps are generated in the following way:

$$MIN\_R_{(x,\,y)} = \min(Frame1\_R_{(x,\,y)},\, Frame2\_R_{(x,\,y)})$$

wherein R denotes a color component and x, y denote pixel's coordinates. The above function selects lower of the two values.

$$MAX\_R_{(x,\,y)} = \max(Frame1\_R_{(x,\,y)},\, Frame2\_R_{(x,\,y)})$$

wherein R denotes a color component and x, y denote pixel's coordinates. The above function selects greater of the two values.

$$MIN\_G_{(x,\,y)} = \min(Frame1\_G_{(x,\,y)},\, Frame2\_G_{(x,\,y)})$$

$$MAX\_G_{(x,\,y)} = \max(Frame1\_G_{(x,\,y)},\, Frame2\_G_{(x,\,y)})$$

$$MIN\_B_{(x,y)} = min(Frame1\_B_{(x, y)}, Frame2\_B_{(x, y)})$$

$$MAX\_B_{(x, y)} = max(Frame1\_B_{(x, y)}, Frame2\_B_{(x, y)})$$

As a result the MIN bitmap's pixels comprise RGB values that are lowest among the first frame and the second frame of the set and the MAX bitmap's pixels comprise RGB values that are highest among the first frame and the second frame of the set.

In other words the aim of creating the MIN and MAX bitmaps is to determine within a set of frames the maximum and minimum value each pixel assumes (in particular each color component of such pixel).

For example if the first exemplary frame comprises four pixels

((1, 1, 1), (5, 5, 5), (3, 3, 3), (9, 9, 9)) (the triplets denoting RGB values)

and the second exemplary frame comprises four pixels

((6, 6, 6), (4, 4, 4), (3, 3, 3), (7, 7, 7))

the resulting MIN frame will comprise four pixels

((1, 1, 1), (4, 4, 4), (3, 3, 3), (7, 7, 7))

and the resulting MAX frame will comprise four pixels

((6, 6, 6), (5, 5, 5), (3, 3, 3), (9, 9, 9)).

For each subsequent frame of the set of N frames, at step 104, the MIN and MAX bitmaps are iteratively modified in the following way for each pixel:

$$MIN\_R_{(x, y)} = min(FrameK\_R_{(x, y)}, MIN\_R_{(x, y)})$$

$$MAX\_R_{(x, y)} = max(FrameK\_R_{(x, y)}, MAX\_R_{(x, y)})$$

$$MIN\_G_{(x, y)} = min(FrameK\_G_{(x, y)}, MIN\_G_{(x, y)})$$

$$MAX\_G_{(x, y)} = max(FrameK\_G_{(x, y)}, MAX\_G_{(x, y)})$$

$$MIN\_B_{(x, y)} = min(FrameK\_B_{(x, y)}, MIN\_B_{(x, y)})$$

$$MAX\_B_{(x, y)} = max(FrameK\_B_{(x, y)}, MAX\_B_{(x, y)})$$

Wherein FrameK denotes $K^{th}$ frame in the set of N frames and x, y denote pixels coordinates. It is to be noted that the method according to the present inventions at one time keeps a single MIN bitmap and a single MAX bitmap that are updated with each subsequent FrameK. In general the MIN and MAX bitmaps are modified such that new MIN value is the lower value of the previous state MIN for the given pixel and the value a the pixel in the $K^{th}$ frame whereas the new MAX value is the greater value of the previous state MAX for the given pixel and the value a the pixel in the $K^{th}$ frame. Therefore, the MIN and MAX bitmaps represent minimum and maximum values of pixels of all so far evaluated frames belonging to the set of N frames.

The number of frames for the analysis may be chosen depending on the amount of expected movement and/or speed of the movement in the video sequence. If there are expected numerous fast moving objects, the number of frames is to be preferably reduced. Otherwise, when there are infrequent, rather slow objects, the number of frames may be increased.

Too many frames under analysis will lead, in case of a fast moving object, to blending in numerous objects into one. This in turn will severely limit possibilities and success rate for object classification (for example determining object's size will be inaccurate).

After generating the MIN and MAX bitmaps, at step 105, there are calculated differences by creating a DIFF bitmap (differential bitmap):

$$DIFF\_R_{(x, y)} = MAX\_R_{(x, y)} - MIN\_R_{(x, y)}$$

$$DIFF\_G_{(x, y)} = MAX\_G_{(x, y)} - MIN\_G_{(x, y)}$$

$$DIFF\_B_{(x, y)} = MAX\_B_{(x, y)} - MIN\_B_{(x, y)}$$

Further, at step 106, there is generated a movement MOVE bitmap. The MOVE bitmap represents any movement detected in the set of N frames including noise that may obscure the real movement and make the readings less reliable. The MOVE bitmap is generated in the following way:

$$MOVE_{(x, y)} = max(DIFF\_R_{(x, y)}, DIFF\_G_{(x, y)}, DIFF\_B_{(x, y)})$$

The MOVE bitmap is created from an RGB bitmap by comparing R value with G value and with B value. This in turn means that the MOVE bitmap is a monochrome bitmap.

In order to exclude noise and irrelevant movement a binary bitmap inMOVE is generated, at step 107, which is the MOVE bitmap with a filtering applied:

$$inMOVE = MOVE > threshold$$

wherein in case a value in the MOVE bitmap is greater than the threshold value, the value of 1 is entered into the inMOVE bitmap and in case the value in the MOVE bitmap is equal of lower than the threshold value, the value of 0 is entered into the inMOVE bitmap. It is to be understood that the inMOVE bitmap has preferably the same number of pixels and the same arrangement of pixels as the MOVE bitmap.

The threshold value is a scalar that specifies the values of the bitmap MOVE (pixel) that is considered as the background (with superimposed noise) the values that are pixels of an object in motion. In particular wherein a value of a pixel of the MOVE bitmap is greater than the threshold value, the pixel is considered as an object in movement whereas if a value of a pixel of the MOVE bitmap is equal or lower than the threshold value, the pixel is considered as background.

A movie sample of the location without movement may be considered a good indicator to calculate the threshold. Such movie sample will facilitate an assessment of the impact of noise on the values in the bitmap MOVE. For example, the threshold value may be higher than the highest value in the MOVE on a sample movie without movement. One may also set different thresholds at ones discretion so as to suit particular requirements eg. Movement only of large, distinctive objects.

The inMOVE bitmap indicates pixels belonging to objects in movement. An analysis of this bitmap has to be executed, at step 108, which will merge adjacent pixels having a value of 1 into objects and subsequently create for each inMOVE bitmap an objects descriptors database (DES), which comprises the following fields:

- object's identifier;

- object's location (for example location of a geometric center or location of a highest placed pixel);

- the surface of the object (eg. Number of pixels having a value of 1 belonging to the object);

- outline of the object in a vector form (vertices coordinates specified as absolute values or incremental values with respect to the previous vertex);

- vertices coordinates of a smallest rectangle circumscribed on the object (parallel to an edge of the inMOVE bitmap);

- optionally there may be provided other information on the object such as Euler's value or central moments.

The DES database may be added to a video frame being the first frame of the set of N frames analyzed according to the present invention. It may however be added to a different frame of the set of N frames. The analysis based on DES databases of subsequent sets of images allows for determination of objects' movement dynamics. For example, assuming two moving objects have been detected, in the DES database for subsequent frames the same objects will assume different coordinates. If two records of the DES database in two subsequent frames are compared one may calculate velocity of the object based on time difference between the frames

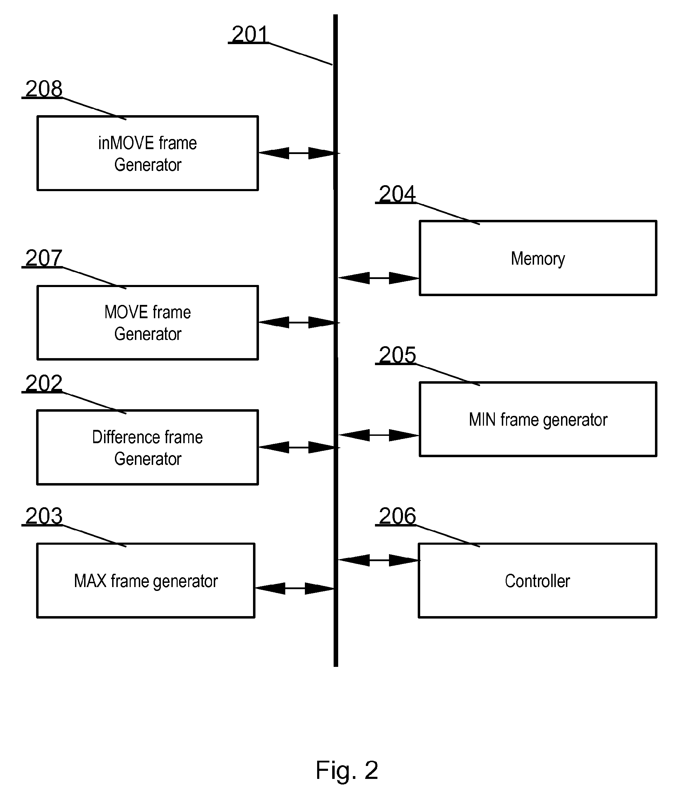

FIG. 2 presents a system according to the present invention. The system comprises some input/output ports (not shown) for inputting data to be processed and outputting the processing results. The processing results, both temporary and final, are stored in memory 204. The memory 204 is coupled to other system components by means of a system bus 201.

The separate components of the system are responsible for executing data processing defined according to the method shown in Fig. 1 and are managed by a controller circuit 206. The MIN frame generator 205 and MAX frame generator 203 are responsible for creating the MIN and MAX bitmaps according to the step 103 of the method according to the present invention. Further the difference frame generator 202 is responsible for creating a differential bitmap from the MIN and MAX bitmaps. Additionally the MOVE (movement representing bitmap) frame generator 207 is configured to execute step 106 of the method according to the present invention while the inMOVE frame generator 208 (this module is a movement representing bitmap filter) is configured to execute step 107 of the method according to the present invention. Finally the controller circuit 206 may apply the inMOVE bitmap analysis and DES database generation according to the step 108 of the method according to the present invention.

This aforementioned method may be used to build a surveillance camera that will not only compress video data but also detect motion in its field of view. Subsequently such a camera may assess whether to raise the alarm or not. This is important in the case of supervised locations, where for example entrance of an animal in the field of view of the camera, does not constitute threats to the protected location.

In order to make a computer assessment of risk, it is necessary to detect moving objects and classify them into groups of harmless (eg too small) or threatening (all other cases - the decision has to be taken by a human system operator). Classification shall be based on the characteristics of the detected moving objects (eg, size, position, speed, acceleration and trajectory). Such a camera may work with a computer monitoring system, receiving both video data and information on detected objects.

The area of application of the present invention include video surveillance systems; optical reconnaissance systems; optical guidance systems.

Due to the simplicity of the method it can be easily implemented both in hardware and in software. It can be implemented in typical surveillance cameras and be the basis of the implemented detection system at the level of a single camera. Such camera will be able to make a much more complex evaluation of the situation than the commonly used alarm on violation of a protected area.

It can be easily recognized, by one skilled in the art, that the aforementioned method for movement detection in images sequence may be performed and/or controlled by one or more computer programs. Such computer programs are typically executed by utilizing the computing resources in a computing device such as personal computers, personal digital assistants, cellular telephones, receivers and decoders of digital television or the like. Applications are stored on a non-transitory medium. An example of a non-transitory medium is a non-volatile memory, for example a flash memory or volatile memory, for example RAM. The computer instructions and are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

**Claims**

1. Method for movement detection in images sequence, the method comprising receiving (101) a set of N video frames and setting (102) the last frame of the set as the current frame, the method being **characterized in that** it further comprises the steps of:

   • creating (103), based on two first video frames of the set a MIN bitmap having RGB color space, the MIN bitmap comprising RGB pixel values that are lowest among the first frame and the second frame of the set of N;
   • creating (103), based on two first video frames of the set a MAX bitmap having RGB color space, the MAX bitmap comprising RGB pixel values that are highest among the first frame and the second frame of the set of N;
   • for each subsequent frame of the set of N frames, iteratively modifying (104), the MIN and MAX bitmaps such that new MIN value is the lower value of the previous MIN for the given pixel and the value a the pixel in the subsequent frame whereas the new MAX value is the greater value of the previous state MAX for the given pixel and the value a the pixel in the subsequent frame;
   • calculating (105) a differential bitmap from the MIN and MAX bitmaps;
   • generating (106) a monochrome movement representing bitmap (MOVE) from the differential bitmap;
   • filtering (107) the monochrome movement representing bitmap against a threshold;
   • merging (108) adjacent pixels of the filtered bitmap, representing movement, into objects and subsequently creating for each filtered bitmap an objects' descriptors database.

2. The method according to claim 1 **characterized in that** the step of creating the MIN bitmap RGB pixel values includes calculating pixels values with the following equation $MIN\_R_{(x, y)} = min(Frame1\_R_{(x, y)}, Frame2\_R_{(x, y)})$ wherein R denotes a color component and x, y denote pixel's coordinates.

3. The method according to claim 1 **characterized in that** the step of creating the MAX bitmap RGB pixel values includes calculating pixels values with the following equation $MAX\_R_{(x, y)} = max(Frame1\_R_{(x, y)}, Frame2\_R_{(x, y)})$ wherein R denotes a color component and x, y denote pixel's coordinates.

4. The method according to claim 1 **characterized in that** the step of iteratively modifying the MIN and MAX bitmaps, for each subsequent frame of the set of N frames, includes executing the following equation for the MIN bitmap: $MIN\_R_{(x, y)} = min(FrameK\_R_{(x, y)}, MIN\_R_{(x, y)})$ and the following equation for the MAX bitmap: $MAX\_R_{(x,y)} = max(FrameK\_R_{(x, y)}, MAX\_R_{(x, y)})$ wherein FrameK denotes Kth frame in the set of N frames, R denotes color component of each pixel and x, y denote pixels coordinates.

5. The method according to claim 1 **characterized in that** the value of N is chosen depending on the amount of expected movement and/or speed of the movement in the video sequence.

6. The method according to claim 1 **characterized in that** the step of calculating 105 a differential bitmap from the MIN and MAX bitmaps includes executing the following equation: $DIFF\_R_{(x, y)} = MAX\_R_{(x, y)} - MIN\_R_{(x, y)}$ wherein R denotes color component of each pixel and x, y denote pixels coordinates.

7. The method according to claim 1 **characterized in that** the step of filtering the monochrome movement representing bitmap against a threshold is such that in case a value in the monochrome movement representing bitmap is greater than the threshold value, the value of 1 is entered into the filtered bitmap and in case the value in the monochrome movement representing bitmap is equal of lower than the threshold value, the value of 0 is entered into the filtered bitmap.

8. The method according to claim 1 **characterized in that** the step of creating for each filtered bitmap an objects' descriptors database includes providing for each object: object's location and/or outline of the object in a vector form and/or vertices coordinates of a smallest rectangle circumscribed on the object.

9. The method according to claim 8 **characterized in that** the objects' descriptors database is added to a video frame being the first frame of the set of N frames.

**10.** System for movement detection in images sequence, the system comprising means for receiving (101) a set of N video frames and setting (102) the last frame of the set as the current frame, the system being **characterized in that** it further comprises:

> • creating (103), in a MIN frame generator (205), based on two first video frames of the set a MIN bitmap having RGB color space, the MIN bitmap comprising RGB pixel values that are lowest among the first frame and the second frame of the set of N;
> • creating (103), in a MAX frame generator (203), based on two first video frames of the set a MAX bitmap having RGB color space, the MAX bitmap comprising RGB pixel values that are highest among the first frame and the second frame of the set of N;
> • for each subsequent frame of the set of N frames, iteratively modifying (104), the MIN and MAX bitmaps such that new MIN value is the lower value of the previous MIN for the given pixel and the value a the pixel in the subsequent frame whereas the new MAX value is the greater value of the previous state MAX for the given pixel and the value a the pixel in the subsequent frame;
> • calculating (105), by a difference frame generator (202), a differential bitmap from the MIN and MAX bitmaps;
> • generating (106), by a frame movement representing bitmap generator (207), a monochrome movement representing bitmap (MOVE) from the differential bitmap;
> • filtering (107), by a movement representing bitmap filter (208), the monochrome movement representing bitmap against a threshold;
> • merging (108), by a controller (206), adjacent pixels of the filtered bitmap, representing movement, into objects and subsequently creating for each filtered bitmap an objects' descriptors database.

**11.** A computer program comprising program code means for performing all the steps of the computer-implemented method according to any of claims 1 - 9 when said program is run on a computer.

**12.** A computer readable medium storing computer-executable instructions performing all the steps of the computer-implemented method according to any of claims 1 - 9 when executed on a computer.

**Amended claims in accordance with Rule 137(2) EPC.**

**1.** Method for movement detection in images sequence, the method comprising receiving (101) a set of N video frames and setting (102) the last frame of the set as the current frame, the method further comprising the steps of:

> - creating (103), based on the first frame and the second frame of the set of N a MIN bitmap having RGB color space, the MIN bitmap comprising RGB pixel values that are lowest among the first frame and the second frame of the set of N;
> - creating (103), based on the first frame and the second frame of the set of N a MAX bitmap having RGB color space, the MAX bitmap comprising RGB pixel values that are highest among the first frame and the second frame of the set of N;
> - for each subsequent frame of the set of N frames, iteratively modifying (104), the MIN and MAX bitmaps such that new MIN bitmap pixel's color component value is the lower value of the previous MIN bitmap pixel's color component value for the given pixel and the value of that pixel's color component in the subsequent frame whereas the new MAX bitmap pixel's color component value is the greater value of the previous state MAX bitmap pixel's color component value for the given pixel and the value of that pixel's color component in the subsequent frame;
> - calculating (105) a differential bitmap from the MIN and MAX bitmaps;
> - generating (106) a monochrome movement representing bitmap (MOVE) from the differential bitmap;
> - filtering (107) the monochrome movement representing bitmap against a threshold;

the method being **characterized in that** it further comprises the steps of:

> - merging (108) adjacent pixels of the filtered bitmap, representing movement, into objects and subsequently creating for each filtered bitmap an objects' descriptors database; and
> - classifying records of the database in terms of the risks posed by the identified object.

**2.** The method according to claim 1 **characterized in that** the step of creating the MIN bitmap RGB pixel values includes calculating pixels values with the following equation $\text{MIN\_R}_{(x, y)} = \min(\text{Frame1\_R}_{(x, y)}, \text{Frame2\_R}_{(x, y)})$

wherein R denotes a color component and x, y denote pixel's coordinates.

3. The method according to claim 1 **characterized in that** the step of creating the MAX bitmap RGB pixel values includes calculating pixels values with the following equation $MAX\_R_{(x, y)} = max(Frame1\_R_{(x, y)}, Frame2\_R_{(x, y)})$ wherein R denotes a color component and x, y denote pixel's coordinates.

4. The method according to claim 1 **characterized in that** the step of iteratively modifying the MIN and MAX bitmaps, for each subsequent frame of the set of N frames, includes executing the following equation for the MIN bitmap: $MIN\_R_{(x, y)} = min(FrameK\_R_{(x, y)}, MIN\_R_{(x, y)})$ and the following equation for the MAX bitmap: $MAX\_R_{(x, y)} = max(FrameK\_R_{(x, y)}, MAX\_R_{(x, y)})$ wherein FrameK denotes K$^{th}$ frame in the set of N frames, R denotes color component of each pixel and x, y denote pixels coordinates.

5. The method according to claim 1 **characterized in that** the value of N is chosen depending on the amount of expected movement and/or speed of the movement in the video sequence.

6. The method according to claim 1 **characterized in that** the step of calculating 105 a differential bitmap from the MIN and MAX bitmaps includes executing the following equation: $DIFF\_R_{(x, y)} = MAX\_R_{(x, y)} - MIN\_R_{(x, y)}$ wherein R denotes color component of each pixel and x, y denote pixels coordinates.

7. The method according to claim 1 **characterized in that** the step of filtering the monochrome movement representing bitmap against a threshold is such that in case a value in the monochrome movement representing bitmap is greater than the threshold value, the value of 1 is entered into the filtered bitmap and in case the value in the monochrome movement representing bitmap is equal of lower than the threshold value, the value of 0 is entered into the filtered bitmap.

8. The method according to claim 1 **characterized in that** the step of creating for each filtered bitmap an objects' descriptors database includes providing for each object: object's location and/or outline of the object in a vector form and/or vertices coordinates of a smallest rectangle circumscribed on the object.

9. The method according to claim 8 **characterized in that** the objects' descriptors database is added to a video frame being the first frame of the set of N frames.

10. System for movement detection in images sequence, the system comprising means for receiving (101) a set of N video frames and setting (102) the last frame of the set as the current frame, the system further comprising:

   - creating (103), in a MIN frame generator (205), based on the first frame and the second frame of the set of N a MIN bitmap having RGB color space, the MIN bitmap comprising RGB pixel values that are lowest among the first frame and the second frame of the set of N;
   - creating (103), in a MAX frame generator (203), based on the first frame and the second frame of the set of N a MAX bitmap having RGB color space, the MAX bitmap comprising RGB pixel values that are highest among the first frame and the second frame of the set of N;
   - for each subsequent frame of the set of N frames, iteratively modifying (104), the MIN and MAX bitmaps such that new MIN bitmap pixel's color component value is the lower value of the previous MIN bitmap pixel's color component value for the given pixel and the value of that pixel's color component in the subsequent frame whereas the new MAX bitmap pixel's color component pixel value is the greater value of the previous state MAX bitmap pixel's color component value for the given pixel and the value of that pixel's color component in the subsequent frame;
   - calculating (105), by a difference frame generator (202), a differential bitmap from the MIN and MAX bitmaps;
   - generating (106), by a frame movement representing bitmap generator (207), a monochrome movement representing bitmap (MOVE) from the differential bitmap;
   - filtering (107), by a movement representing bitmap filter (208), the monochrome movement representing bitmap against a threshold;

   the system being **characterized in that** it further comprises:

   - merging (108), by a controller (206), adjacent pixels of the filtered bitmap, representing movement, into objects and subsequently creating for each filtered bitmap an objects' descriptors database; and
   - classifying, by the controller (206), records of the database in terms of the risks posed by the identified object.

**11.** A computer program comprising program code means for performing all the steps of the computer-implemented method according to any of claims 1 - 9 when said program is run on a computer.

**12.** A computer readable medium storing computer-executable instructions performing all the steps of the computer-implemented method according to any of claims 1 - 9 when executed on a computer.

101 — Receive a set of N video frames

102 — Set the last frame of the set as the current frame

103 — Create the MIN, MAX bitmaps for the first two frames of the set, comprising minimum and maximum values respectively of the pixels of the first two frames

104 — Create the MIN, MAX bitmaps for the subsequent frames wherein the first frame is the Kth frame and the second frame is the previous MIN or MAX frame respectively

105 — Create a differential bitmap from the MIN and MAX bitmaps

106 — Generate movement bitmap MOVE

107 — Filter the movement map MOVE Into an inMOVE bitmap

108 — Analyse the inMOVE bitmap In order to find objects

Fig. 1

Fig. 2

Europäisches
Patentamt

European
Patent Office

Office européen
des brevets

**EUROPEAN SEARCH REPORT**

Application Number

EP 13 19 9638

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2005/180595 A1 (HORII YOUICHI [JP] ET AL) 18 August 2005 (2005-08-18)<br>* paragraph [0031] *<br>* paragraph [0037] - paragraph [0045] * | 1-12 | INV.<br>G06T7/20 |
| Y | US 5 969 755 A (COURTNEY JONATHAN D [US]) 19 October 1999 (1999-10-19)<br>* column 4, line 11 - line 61 *<br>* column 5, line 58 - column 6, line 31 *<br>* column 12, line 6 - line 41 * | 1-12 | |
| A | JORGE GARCIA ET AL: "Directional People Counter Based on Head Tracking", IEEE TRANSACTIONS ON INDUSTRIAL ELECTRONICS, IEEE SERVICE CENTER, PISCATAWAY, NJ, USA, vol. 60, no. 9, 1 September 2013 (2013-09-01), pages 3991-4000, XP011507050, ISSN: 0278-0046, DOI: 10.1109/TIE.2012.2206330<br>* page 3993 - page 3994 * | 1-12 | |
| A | PIERRE-MARC JODOIN: "Comparative study of background subtraction algorithms", JOURNAL OF ELECTRONIC IMAGING, vol. 19, no. 3, 1 July 2010 (2010-07-01), page 033003, XP055106462, ISSN: 1017-9909, DOI: 10.1117/1.3456695<br>* section 2.3 * | 1-12 | TECHNICAL FIELDS SEARCHED (IPC)<br><br>G06T |

The present search report has been drawn up for all claims

| Place of search | Date of completion of the search | Examiner |
|---|---|---|
| Munich | 14 July 2014 | Rockinger, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                    

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 13 19 9638

This annex lists the patent family members relating to the patent documents cited in the above-mentioned European search report.
The members are as contained in the European Patent Office EDP file on
The European Patent Office is in no way liable for these particulars which are merely given for the purpose of information.

14-07-2014

| Patent document cited in search report | | Publication date | Patent family member(s) | | Publication date |
|---|---|---|---|---|---|
| US 2005180595 | A1 | 18-08-2005 | JP | 4479267 B2 | 09-06-2010 |
| | | | JP | 2005236464 A | 02-09-2005 |
| | | | US | 2005180595 A1 | 18-08-2005 |
| US 5969755 | A | 19-10-1999 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8437503 B2
- US 7436887 B2
- US 6678413 B1